Europäisches Patentamt

European Patent Office

Office européen des brevets

(19)

(11) **EP 0 818 267 B1**

(12) **EUROPÄISCHE PATENTSCHRIFT**

(45) Veröffentlichungstag und Bekanntmachung des Hinweises auf die Patenterteilung:
**13.09.2000   Patentblatt 2000/37**

(51) Int Cl.[7]: **B23K 11/00**, B21F 27/10

(21) Anmeldenummer: **97810442.0**

(22) Anmeldetag: **04.07.1997**

(54) **Gitterschweissmachine**

Grid welding machine

Machine à souder des treillis

(84) Benannte Vertragsstaaten:
**AT CH DE IT LI**

(30) Priorität: **09.07.1996  CH 171496**

(43) Veröffentlichungstag der Anmeldung:
**14.01.1998   Patentblatt 1998/03**

(73) Patentinhaber: **H.A. SCHLATTER AG**
**CH-8952 Schlieren Zürich (CH)**

(72) Erfinder: **Rudin, Paul**
**5436 Würenlos (CH)**

(74) Vertreter:
**Roshardt, Werner Alfred, Dipl.-Phys. et al**
**Keller & Partner**
**Patentanwälte AG**
**Zeughausgasse 5**
**Postfach**
**3000 Bern 7 (CH)**

(56) Entgegenhaltungen:
**EP-A- 0 308 837          AT-B- 292 427**
**DE-A- 4 331 139          DE-B- 2 152 027**
**DE-C- 665 243          US-A- 3 405 743**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

### Technisches Gebiet

Die Erfindung betrifft eine Gitterschweissmaschine mit mehreren im Schweissrhythmus bewegbaren Schweisselektroden (12), welche durch Schweisspressen (11) an einem gemeinsamen Träger (5), der mit Hilfe von Antrieben im Schweissrhythmus heb- und senkbar ist, abgestützt sind.

### Stand der Technik

Eine Gitterschweissmaschine der eingangs genannten Art ist z.B. aus der DE 43 31 139 A1 bekannt. Bei dieser sind die oberen Schweisselektroden, welche im Schweissrhythmus auf und ab bewegt werden müssen, an einer Traverse befestigt. Zur Durchführung der vertikalen Elektrodenbewegung wird die ganze Traverse mit einer Servosteuerung im Schweissrhythmus bewegt.

Da die Traverse hohe Kräfte aufnehmen muss, ist sie ziemlich gross und schwer ausgeführt. Dies führt dazu, dass die Servosteuerung auf sehr hohe Leistungen ausgelegt werden muss. Auch kann die schwere Masse der Traverse nicht beliebig schnell beschleunigt und verzögert werden. Mit anderen Worten, bei der bekannten Gitterschweissmaschine kann der Schweisstakt nicht beliebig erhöht werden.

### Darstellung der Erfindung

Aufgabe der Erfindung ist es deshalb, eine Gitterschweissmaschine der eingangs genannten Art anzugeben, die eine beträchtliche Erhöhung des Schweissrhythmus' erlaubt.

Die erfindungsgemässe Lösung ist durch die Merkmale des Anspruchs 1 definiert. Demzufolge sind zum Heben und Senken des Trägers mehrere über seine Breite verteilte Betätigungselemente vorgesehen, welche an einem die ganze Breite der Gitterschweissmaschine überspannenden, den gesamten Schweissdruck aufnehmenden Joch abgestützt sind. Durch diese Massnahme wird es möglich, den Träger beträchtlich leichter auszuführen und somit sein Trägheitsmoment zu minimieren bzw. zu optimieren. Die Anzahl der Betätigungselemente wird so gewählt, dass der erfindungsgemäss relativ dünne Träger (auch bei den erforderlichen hohen Schweisspresskräften) keine unzulässigen Durchbiegungen erleidet.

Die Zahl der Betätigungselemente ist kleiner als die Zahl der Schweisselektroden bzw.- pressen. Typischerweise greifen am Träger drei- bis viermal so viele Schweisselektroden an wie Betätigungselemente. Es kommt dabei nicht zuletzt auch auf den gegenseitigen Abstand der Schweisselektroden an.

Die gemeinsam am Träger angreifenden Betätigungselemente sind z. B. mechanisch oder elektrisch synchronisiert angetrieben. Im Rahmen einer mechanischen Konstruktion können z. B. Pleuelstangen vorgesehen sein, welche durch Exzenter, welche auf einer gemeinsamen Welle angeordnet sind, betätigt werden. Die Betätigungselemente können aber auch durch hydraulische oder elektrische Antriebe gebildet sein. Der Träger ist z. B. durch Parallelschwingarme vertikal beweglich gehalten.

Vorzugsweise sind die Schweisspressen vorgespannt, damit die Schweisskraft unmittelbar nach dem Aufsetzen der Elektroden wirksam wird. Das nachfolgende Zusammenpressen gegen die Vorspannkraft bewirkt, dass die Schweisselektroden während des Schweissens dem nachgebenden Schweissknoten folgen können. Die dazu erforderliche Vorspannkraft kann z. B. mechanisch (durch Federn), hydraulisch oder pneumatisch zur Verfügung gestellt werden. Die pneumatische oder hydraulische Vorspannung hat den Vorteil, dass die Vorspannkraft zentral eingestellt und somit auch mit geringem Aufwand angepasst bzw. variiert werden kann (Anpassung an das Schweissgut).

Bei grossen Maschinenbreiten kann es von Vorteil sein, wenn nicht ein einziger durchgehender Schweisspressenträger vorhanden ist, sondern wenn dieser funktionell in kürzere Einheiten zerlegt ist. Mit anderen Worten, es können mehrere miteinander fluchtende und synchron betriebene Träger vorgesehen sein.

Wird der Träger mit Hilfe von Pleuelstangen betätigt, dann kann es von Vorteil sein, die Winkelgeschwindigkeit innerhalb eines Schweisstaktes zu variieren, um den von den Schweisspressen aufzunehmenden Hub zu optimieren bzw. zu minimieren, aber auch um bei hoher Zustell- und Abhebegeschwindigkeit eine ausreichend lange Zeitspanne für den Schweissprozess zu gewährleisten. In diesem Sinn ist z. B. im unteren Totpunkt des Exzenters die Winkelgeschwindigkeit kleiner als im oberen. Mit anderen Worten, die Geschwindigkeit ändert in Abhängigkeit von der Winkelstellung des Exzenters. Die maximale und minimale Winkelgeschwindigkeit können ohne weiteres um 20 % und mehr voneinander abweichen.

Um die Maschine auf unterschiedliche Drahtdicken einstellen zu können, ist das Joch (z. B. durch einen manuell oder motorisch betätigen Spindelantrieb) höhenverstellbar. Mit einer solchen Konstruktion ist es auch möglich, der fortschreitenden Abnutzung der Schweisselektroden Rechnung zu tragen.

Weitere vorteilhafte Ausführungsformen und Merkmalskombinationen ergeben sich aus der nachfolgenden Detailbeschreibung und der Gesamtheit der Patentansprüche.

### Kurze Beschreibung der Zeichnungen

Die zur Erläuterung des Ausführungsbeispiels verwendeten Zeichnungen zeigen:

Fig. 1      eine schematische Darstellung einer erfindungsgemässen Gitterschweissmaschine;

Fig. 2      eine schematische Darstellung des Mechanismus' zum Betätigen des Schweisspressenträgers;

Fig. 3      eine schematische Darstellung des Antriebs mittels Exzenter und Pleuelstange;

Fig. 4a, 4b      schematische Diagramme zur Erläuterung der variierenden Winkelgeschwindigkeit;

Fig. 5      ein schematisches Diagramm der variierenden Winkelgeschwindigkeit innerhalb eines Schweisstaktes.

Grundsätzlich sind in den Figuren gleiche Teile mit gleichen Bezugszeichen versehen.

## Wege zur Ausführung der Erfindung

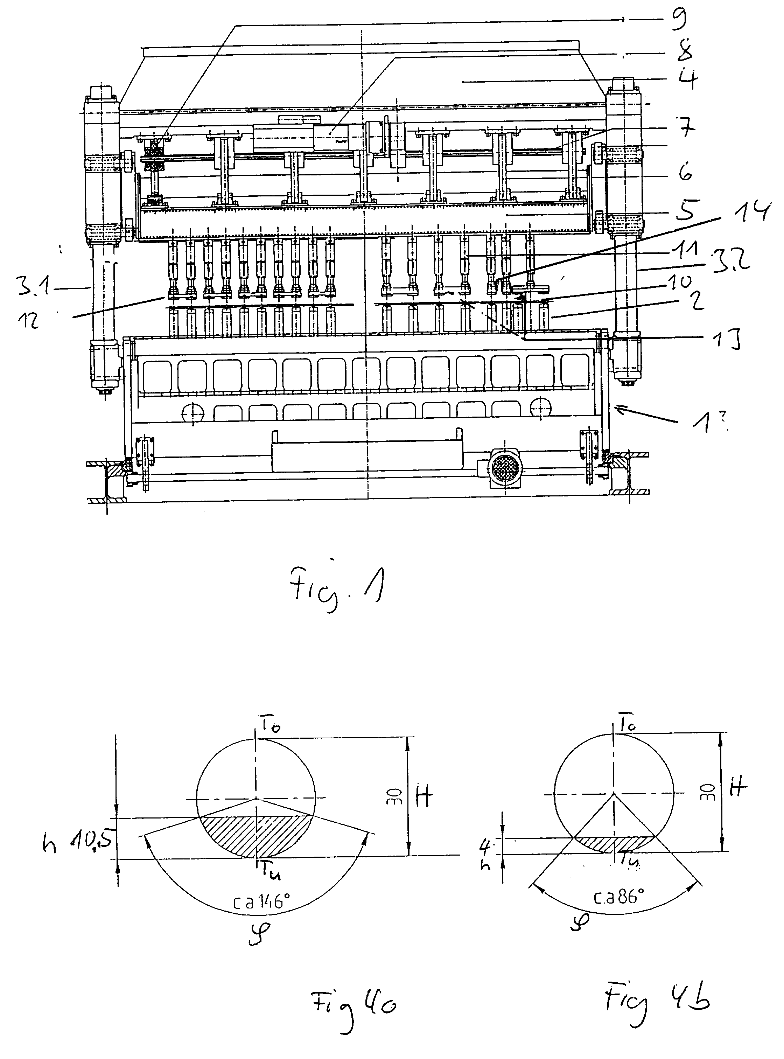

Fig. 1 zeigt schematisch eine erfindungsgemässe Gitterschweissmaschine. In der gewählten Darstellung verlaufen die Längsdrähte senkrecht zur Zeichenebene.

Die Maschine verfügt in allgemein üblicher Weise über ein Gestell 1. Dieses ist auf dem Boden fest verankert und trägt die unteren Schweisselektroden 2. Auf beiden Seiten des Gestells 1 ist jeweils ein Jochträger 3.1, 3.2 angebracht, um das horizontale Joch 4 in einstellbarer Höhe abzustützen. Die Höhenverstellung wird z. B. durch einen motorisch angetriebenen Spindelantrieb ermöglicht.

Das Joch 4 ist so gestaltet, dass es den gesamten Schweissdruck (in der Höhe von z. B. 100 bis 200 kN) aufnehmen kann. D. h. es hat einen grossen Querschnitt und eine entsprechend grosse Masse. Gemäss der Erfindung ist nun ein Schweisspressenträger 5 vorgesehen, der eine sehr viel geringere Belastbarkeit als das Joch 4 und infolgedessen auch eine entsprechend kleinere Masse hat. Dieser ist über eine Vielzahl von Betätigungselementen 6 an der Unterseite des Jochs 4 abgestützt. Im vorliegenden Beispiel sind sieben gleiche und im gleichen Abstand voneinander angeordnete Betätigungselemente 6 vorgesehen. Ein am Joch 4 angebrachter Antrieb 8 treibt eine unterhalb des Jochs 4 und parallel zu diesem angeordnete Welle 7. Für jedes Betätigungselement 6 sitzt auf dieser ein Exzenterantrieb 9, welcher dafür sorgt, dass sich die Betätigungselemente 6 (und damit natürlich der Schweisspressenträger 5) im Schweissrhythmus auf und ab bewegen.

Auf der linken Seite der in Fig. 1 gezeigten Maschine ist eine Vielzahl von Schweisspressen 11 dargestellt, die jeweils paarweise eine Elektrodenbrücke 12 tragen. Diese Schweisspressen 11 sind an der Unterseite des Schweisspressenträgers 5 abgestützt und bewegen sich somit synchron mit diesem. Weitere Anordnungsmöglichkeiten sind in der rechten Hälfte der in Fig. 1 gezeigten Darstellung ersichtlich. So können z. B. zwei Schweisspressen 11 jeweils über ein Stromband 14 gekoppelt sein. Denkbar ist auch, dass eine einzelne Schweisspresse 11 eine Elektrodenbrücke 13 zum gleichzeitigen Schweissen von zwei benachbarten Knotenpunkten des Gitters trägt (wie bei der aussen rechts gezeigten Schweisspresse). Bei allen drei erwähnten Varianten ist die Zahl der Schweisspressen 11 grösser als diejenige der Betätigungselemente 6. In welchem Verhältnis diese beiden Zahlen im Einzelfall zueinander stehen, ist nicht so wichtig. Ziel ist es jedoch, den Schweisspressenträger 5 so leicht wie möglich zu machen. Entsprechend wird sein Querschnitt in Abhängigkeit vom erwähnten Zahlenverhältnis und der auftretenden Belastung festzulegen sein.

Die gesamte Anzahl der Betätigungselemente 6 hängt von der Breite der Gitterschweissmaschine und natürlich der Belastbarkeit des Schweisspressenträgers 5 ab. In der Regel dürften mindestens drei bis vier Betätigungselemente 6 vorgesehen sein. Rein theoretisch würde aber schon mit zwei solchen Elementen eine Verbesserung gegenüber dem Stand der Technik erreicht werden können, sofern diese beiden Elemente so plaziert werden, dass der Schweisspressenträger 5 in drei etwa gleich grosse Längenabschnitte unterteilt wird.

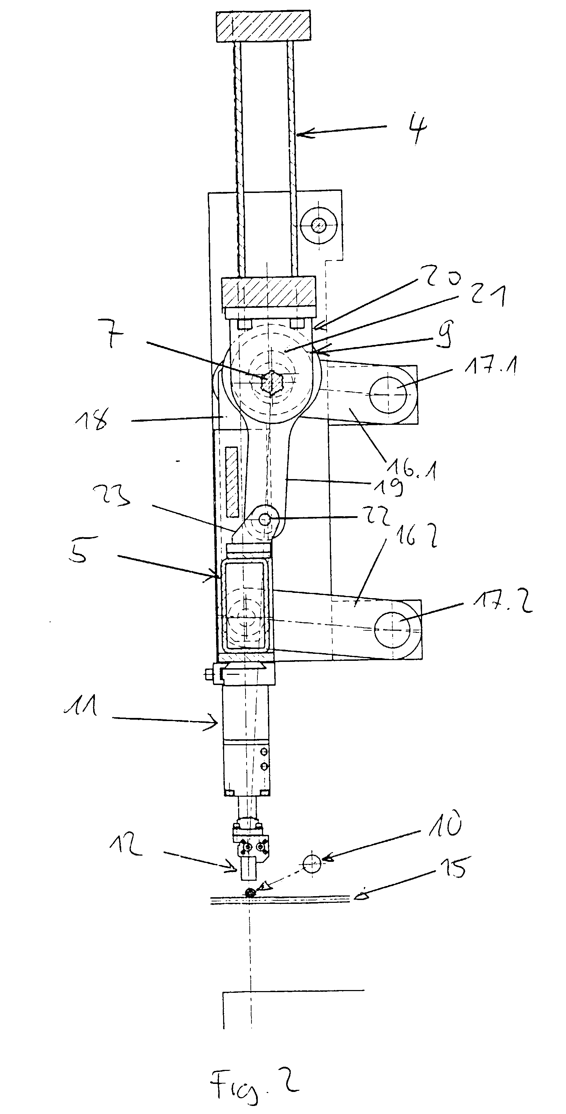

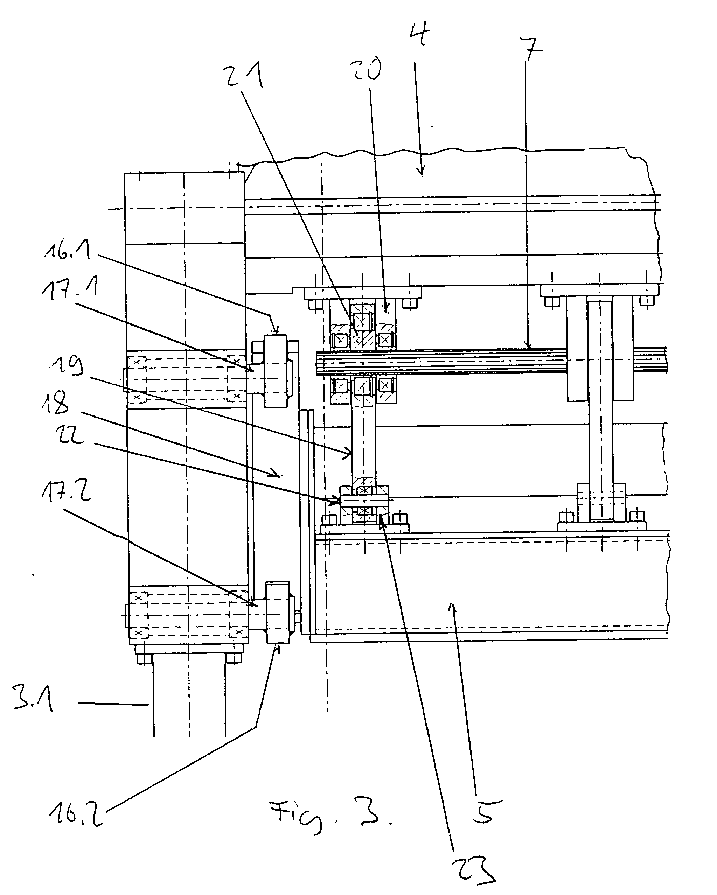

Fig. 2 zeigt den Betätigungsmechanismus in der Seitenansicht. Das Joch 4 und die Welle 7 sind dabei im Schnitt dargestellt. Fig. 3 zeigt zudem einen vergrösserten Ausschnitt aus der Fig. 1, wobei der links dargestellte Exzenterantrieb teilweise aufgeschnitten ist. (Fig. 2 und 3 zeigen denselben Mechanismus, das eine Mal im Querschnitt, das andere Mal im Längsschnitt.)

Für jedes Betätigungselement ist an der Unterseite des Jochs 4 eine Halterung 20 befestigt. Sie trägt bzw. lagert die Welle 7. Auf dieser ist (pro Betätigungselement) ein Exzenter 21 angebracht, welcher eine Pleuelstange 19 bewegt. Das untere Ende der Pleuelstange 19 ist im Gelenkpunkt 22 mit einem Anschlusselement 23 beweglich verbunden. Das Anschlusselement 23 ist seinerseits an der Oberseite des Schweisspressenträgers 5 befestigt. Aufgrund des Exzenters 21 wird also die rotierende Bewegung der Welle 7 in eine auf-und-ab Bewegung des Schweisspressenträgers 5 umgesetzt.

Die Bewegungsbahn des Schweisspressenträgers 5 wird z. B. durch eine Parallelschwingvorrichtung kontrolliert. Eine solche umfasst an jedem Ende des Schweisspressenträgers 5 zwei Parallelschwingarme 16.1, 16.2, welche über einen Verbindungsarm 18 an den freien Enden gekoppelt sind. Die anderen Enden der Parallelschwingarme 16.1, 16.2 sind durch ortsfeste Drehachsen 17.1, 17.2 gelagert. Der Schweisspressenträger 5 wird also auf einer Kreisbahn (bzw. einem Kreisbahnsegment) geführt. Vorzugsweise werden die ortsfesten Drehachsen 17.1, 17.2 so plaziert, dass die Parallelschwingarme 16.1, 16.2 etwa horizontal (d. h. parallel zum Längsdraht 15) stehen, wenn die Elektrode 12 auf den Schweisspunkt abgesenkt ist. Auf diese Weise wird der Schweissdruck ziemlich genau in vertikaler Richtung zur Anwendung gebracht.

Mit Vorteil sind die Schweisspressen 11 pneumatisch oder hydraulisch vorgespannt. D. h. es sind Hydraulik- bzw. Pneumatikzylinder und ein Steuersystem vorgesehen, mit welchem ein gewünschter Druck zentral erzeugt werden kann (entsprechend der erforderlichen Vorspannung). Sinkt beim Schweissen der Querdraht 10 in den Längsdraht 15 ein, dann sorgt die Vorspannung für die Aufrechterhaltung eines konstanten Schweissdrucks.

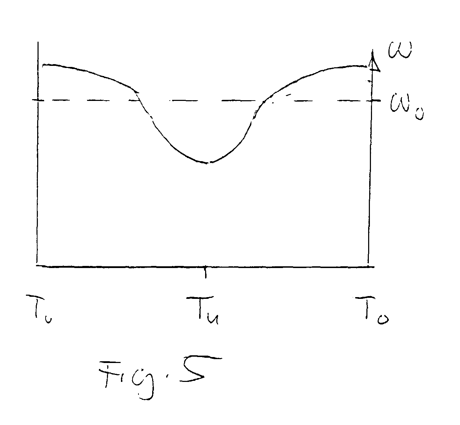

Anhand der Fig. 4a, 4b und 5 soll nun erläutert werden, welche Vorteile ein ungleichmässiger Antrieb der Welle 7 mit sich bringen kann.

Angenommen, es soll eine Kadenz von 150 Querdrähten pro Minute mit einem Exzentermass von 15 mm (d. h. einem Gesamthub H des Schweisspressenträgers von 30 mm) erreicht werden.

Für das Aufsetzen der Schweisspresse werden ca. 10 ms, für das Synchronisieren (bzgl. des 50 Hz Schweissstroms) ca. 10 ms, für das Schweissen ca. 113 ms, für das Nachpressen ca. 20 ms und für den Kraftabbau ca. 10 ms (d. h. ca. 3 mm) gebraucht. Dies ergibt eine totale Arbeitszeit ("Schweisswinkelzeit") von ca. 163 ms. Wird die Welle 7 gleichförmig rotiert, dann entspricht die soeben ermittelte Arbeitszeit von 163 ms (bei einer Zykluszeit von 400 ms) einem Winkel $\varphi$ von ca. 146 Grad. Dies entspricht unter den vorliegenden Annahmen einem Kolbenstangenhub h von ca. 10.5 mm (vgl. Fig. 4a).

Durch Verwendung einer ungleichmässigen bzw. zyklisch variierenden Winkelgeschwindigkeit kann der Kolbenstangenhub reduziert werden. Im unteren Totpunkt $T_u$ wird demzufolge die Geschwindigkeit vermindert gegenüber derjenigen im oberen Totpunkt $T_o$.

Fig. 4b zeigt beispielhaft eine Ausführungsform, bei welcher der Schweisswinkel durch Vermindern der Winkelgeschwindigkeit im unteren Totpunkt $T_u$ auf ca. 86 Grad reduziert wurde. Der Kolbenstangenhub h betrug dann nur noch 4 mm.

Die variierende Winkelgeschwindigkeit ist in Fig. 5 dargestellt. Auf der Abszisse läuft die Zeit und auf der Ordinate ist die Winkelgeschwindigkeit $\bar\omega$ aufgetragen. $T_o$ steht für den oberen und $T_u$ für den unteren Totpunkt. Gegenüber der konstanten Winkelgeschwindigkeit $\bar\omega_o$ ist die variable Winkelgeschwindigkeit im oberen Totpunkt $T_o$ z. B. etwa 20 % erhöht und im unteren Totpunkt $T_u$ z. B. um maximal 40 % reduziert. Der genaue Verlauf (der im Prinzip von der Winkelstellung des Exzenters abhängt) wird im Einzelfall zu bestimmen sein. Da die Dauer des Schweisstaktes fest ist, muss die variable Winkelgeschwindigkeit (über einen Schweisszyklus hinweg gerechnet) dasselbe Integral wie die konstante Winkelgeschwindigkeit $\bar\omega_o$ haben.

Das beschriebene, besonders bevorzugte Ausführungsbeispiel kann natürlich in diversen Aspekten abgewandelt werden.

Je nachdem, wie gross die aufzubringenden Schweisskräfte sind, können 1, 2 oder mehr Antriebsmotoren eingesetzt werden. Es versteht sich, dass bei mehreren Motoren diese synchron betrieben werden müssen (Master-Slave). Bei grossen Maschinenbreiten kann es auch sinnvoll sein, mehrere Schweisspressenträger (auf einer geometrischen Achse) vorzusehen. Dasselbe gilt im Prinzip für die Welle 7. Auch sie kann unterteilt sein. Allerdings ist dann dafür Sorge zu tragen, dass die einzelnen Wellenteile starr gekoppelt sind. Der Gleichlauf kann durch eine mechanische Kopplung der Wellenabschnitte und/oder durch eine entsprechende Ansteuerung der Antriebsmotoren sichergestellt sein.

Der Schweisspressenträger kann statt mit einer Parallelschwingvorrichtung auch mit einer Linearführung (Schiene/Schlitten) o. dgl. geführt sein.

Die Schweisspressen werden am Schweisspressenträger entsprechend der Geometrie des Gitters festgeklemmt. Die Befestigungsart ist mit Vorteil so gewählt, dass die Maschine für unterschiedliche Gittergrössen umgerüstet werden kann.

Das Joch kann in der Höhe von Hand oder motorisch entsprechend der Dicke des Schweissgutes optimal eingestellt werden. Ebenfalls ist es möglich, über die Stellung des Jochs den Elektrodenabbrand von Zeit zu Zeit zu kompensieren.

Die erfindungsgemässe Schweissmaschine ist mit Vorteil so konstruiert, dass zwei gleichartige Maschinen - zum gleichzeitigen Schweissen von zwei Querdrähten - Kopf an Kopf gestellt werden können. Der minimale Schweisslinienabstand beträgt z. B. 100 mm. Durch Verschieben der einen Maschine in Bezug auf die andere können auch grössere Querdrahtteilungen eingestellt werden.

Zusammenfassend ist festzuhalten, dass durch die Verwendung eines leichten, mehrfach abgestützten bewegten Schweisspressenträgers eine Erhöhung des Schweissrhythmus' möglich ist, ohne dass überdimensionierte Antriebe erforderlich werden.

**Patentansprüche**

1. Gitterschweissmaschine mit mehreren im Schweissrhythmus bewegbaren Schweisselektroden (12), welche durch Schweisspressen (11) an einem gemeinsamen Träger (5), der mit Hilfe von Antrieben im Schweissrhythmus heb- und senkbar ist, abgestützt sind, dadurch gekennzeichnet, dass zum Heben und Senken des Trägers (5) mehrere über seine Breite verteilte Betätigungselemente (6) vorgesehen sind, welche an einem die ganze Breite der Gitterschweissmaschine überspannenden, den gesamten Schweissdruck aufnehmenden Joch (4) abgestützt sind.

2. Gitterschweissmaschine nach Anspruch 1, dadurch gekennzeichnet, dass mindestens drei Betätigungselemente (6) vorgesehen sind und dass die Zahl der Betätigungselemente (6) kleiner als die Zahl der Schweisspressen (11) ist.

3. Gitterschweissmaschine nach Anspruch 1 oder 2, dadurch gekennzeichnet, dass die Betätigungselemente (6) mechanisch gekoppelt oder antriebsmässig synchronisiert sind.

4. Gitterschweissmaschine nach Anspruch 3, dadurch gekennzeichnet, dass die Betätigungselemente (6) durch Pleuelstangen (19), welche mit einer Welle (7) über einen Exzenter (21) angetrieben sind, gebildet werden.

5. Gitterschweissmaschine nach einem der Ansprüche 1 bis 4, dadurch gekennzeichnet, dass die Schweisspressen (11) vorgespannt sind.

6. Gitterschweissmaschine nach Anspruch 5, dadurch gekennzeichnet, dass pneumatische oder hydraulische Mittel zum Erzeugen der Vorspannung vorgesehen sind.

7. Gitterschweissmaschine nach einem der Ansprüche 1 bis 6, dadurch gekennzeichnet, dass zwei oder mehr Träger (5) vorgesehen sind, welche fluchtend zueinander angeordnet und synchron betätigbar sind.

8. Gitterschweissmaschine nach einem der Ansprüche 4 bis 7, dadurch gekennzeichnet, dass eine Antriebssteuerung vorgesehen ist, um die Welle (7) innerhalb eines Schweisstaktes mit variierender Winkelgeschwindigkeit anzutreiben.

9. Gitterschweissmaschine nach einem der Ansprüche 1 bis 8, dadurch gekennzeichnet, dass das Joch (4) höhenverstellbar abgestützt ist.

10. Gitterschweissmaschine nach Anspruch 9, dadurch gekennzeichnet, dass ein Spindelantrieb für die Höhenverstellung vorgesehen ist.

**Claims**

1. Grid welding machine having a number of welding electrodes (12) which can be moved in a welding rhythm and are supported by welding presses (11) on a common carrier (5) which can be raised and lowered in the said welding rhythm with the aid of drives, characterised in that, for raising and lowering the carrier (5), a number of actuating elements (6) are provided which are distributed over the breadth of the said carrier and are supported on a yoke (4) which spans the whole breadth of the grid welding machine and absorbs the entire welding pressure.

2. Grid welding machine according to claim 1, characterised in that at least three actuating elements (6) are provided and that the number of actuating elements (6) is smaller than the number of welding presses (11).

3. Grid welding machine according to claim 1 or 2, characterised in that the actuating elements (6) are mechanically coupled or synchronised drive-wise.

4. Grid welding machine according to claim 3, characterised in that the actuating elements (6) are formed by connecting rods (19) which are driven by means of a shaft (7) via an eccentric (21).

5. Grid welding machine according to one of claims 1 to 4, characterised in that the welding presses (11) are pretensioned.

6. Grid welding machine according to claim 5, characterised in that pneumatic or hydraulic means are provided for generating the pretensioning.

7. Grid welding machine according to one of claims 1 to 6, characterised in that two or more carriers (5) are provided, which are disposed in alignment with one another and can be actuated synchronously.

8. Grid welding machine according to one of claims 4 to 7, characterised in that a drive control is provided in order to drive the shaft (7) with varying angular velocity within a welding phase.

9. Grid welding machine according to one of claims 1 to 8, characterised in that the yoke (4) is supported in a vertically adjustable manner.

10. Grid welding machine according to claim 9, characterised in that a spindle drive is provided for vertical adjustment purposes.

**Revendications**

1. Machine à souder des treillis, comportant plusieurs électrodes de soudage (12) mobiles en fonction du rythme de soudage, lesquelles sont appuyées au moyen de poussoirs (11) contre un support commun (5) qui est susceptible d'être soulevé et abaissé en fonction du rythme de soudage à l'aide de moyens d'entraînement, caractérisée en ce que pour soulever et abaisser le support (5) sont prévus plusieurs éléments d'actionnement (6) répartis sur sa largeur et appuyés contre un étrier (4) qui coiffe toute la largeur de la machine à souder et qui encaisse la totalité de la pression de soudage.

**2.** Machine à souder des treillis selon la revendication 1, caractérisée en ce qu'il est prévu au moins trois éléments d'actionnement (6), et en ce que le nombre des éléments d'actionnement (6) est inférieur au nombre des poussoirs (11).

**3.** Machine à souder des treillis selon l'une ou l'autre des revendications 1 et 2, caractérisée en ce que les éléments d'actionnement (6) sont accouplés mécaniquement ou synchronisés vis-à-vis des entraînements.

**4.** Machine à souder des treillis selon la revendication 3, caractérisée en ce que les éléments d'actionnement (6) sont formés par des bielles (19) qui sont entraînées par un arbre (7) via un excentrique (21).

**5.** Machine à souder des treillis selon l'une quelconque des revendications 1 à 4, caractérisée en ce que les poussoirs (11) sont mis sous précontrainte.

**6.** Machine à souder des treillis selon la revendication 5, caractérisée en ce qu'il est prévu des moyens pneumatiques ou hydrauliques pour générer la précontrainte.

**7.** Machine à souder des treillis selon l'une quelconque des revendications 1 à 6, caractérisée en ce qu'il est prévu deux supports (5) ou plus qui sont agencés en alignement mutuel et susceptibles d'être actionnés de façon synchrone.

**8.** Machine à souder des treillis selon l'une quelconque des revendications 4 à 7, caractérisée en ce qu'il est prévu une commande d'entraînement pour entraîner l'arbre (7) avec une vitesse angulaire variable au cours d'un cycle de soudage.

**9.** Machine à souder des treillis selon l'une quelconque des revendications 1 à 8, caractérisée en ce que l'étrier (4) est supporté de façon réglable en hauteur.

**10.** Machine à souder des treillis selon la revendication 9, caractérisée en ce qu'il est prévu un entraînement à broche pour le réglage en hauteur.

Fig. 1

Fig 4a

Fig 4b

Fig. 2

Fig. 3.

Fig. 5